# EUROPÄISCHE PATENTSCHRIFT

(11) **EP 2 237 063 B1**
(45) Veröffentlichungstag und Bekanntmachung des Hinweises auf die Patenterteilung: **08.02.2012**
(21) Anmeldenummer: 09004763.0
(22) Anmeldetag: 31.03.2009
(51) Int. Cl.: G01S 7/481, G01S 17/42, G01S 7/497

(54) **Optischer Sensor nach dem Laufzeitprinzip**
Optical sensor according to the time-of-flight principle
Capteur optique selon le principe de temps de vol

(43) Veröffentlichungstag der Anmeldung: 06.10.2010
(73) Patentinhaber: Pepperl + Fuchs GmbH, 68307 Mannheim (DE)
(72) Erfinder: Satzky, Uwe, 22455 Hamburg (DE); Tabel, Ernst, 22337 Hamburg (DE)
(74) Vertreter: Schiffer, Axel Martin

(56) Entgegenhaltungen:
- DE-A1- 10 114 362
- DE-A1-102004 014 041
- DE-C1- 19 732 776
- US-A- 4 319 332
- US-A1- 2005 279 914

## Beschreibung

Die vorliegende Erfindung bezieht sich auf einen optischen Sensor nach dem Laufzeitprinzip gemäß dem Oberbegriff des Anspruchs 1.

Ein gattungsgemäßer optischer Sensor ist beispielsweise in EP 1 378 763 A1 beschrieben und weist folgende Komponenten auf. Eine Lichtquelle zum Aussenden von Sendelichtpulsen in einen Überwachungsbereich, eine Dreheinrichtung zum Drehen einer Strahlrichtung der Sendelichtpulse um eine quer zu der Strahlrichtung orientierte Rotationsachse, einen Detektor zum Nachweisen von Lichtpulsen, die von Objekten im Überwachungsbereich zurückgestrahlt werden und eine Steuer- und Auswerteeinheit zum Ansteuern der Lichtquelle, zum Auswerten der von dem Detektor nachgewiesenen Lichtpulse und zum Bestimmen eines Objektabstands aufgrund einer gemessenen Laufzeit der Lichtpulse.

Wegen der Drehung des Sendelichtstrahls und weil als Lichtquellen in der Regel Laser eingesetzt werden, werden solche Geräte auch als Laserscanner, Laserradar oder zweidimensionale Lasermessgeräte bezeichnet. Sensoren dieser Art werden bisher hauptsächlich in der Industrie für eine Vielzahl unterschiedlicher Aufgabenstellungen eingesetzt. Grundsätzlich ist dabei eine vergleichsweise saubere Umgebung notwendig, da bei zu großen Verschmutzungen, Verunreinigungen oder Witterungseinflüssen, wie Regen oder Schnee, der Sensor nicht messen kann.

Gattungsgemäße Geräte werden verwendet zum Navigieren, beispielsweise von Gabelstaplern, wobei dies häufig mit Hilfe von Reflektoren oder Absorbern erfolgt, die an definierten Stellen in der Umgebung angebracht sind. Prinzipiell ist aber auch eine Navigation ohne Reflektoren möglich, wobei auch hier die jeweiligen Gegebenheiten der Umgebung in einer Einlernphase in die Auswerteeinheit eingelesen werden.

Weitere Anwendungsmöglichkeiten bestehen für Aufgaben im Bereich der Hinderniserkennung, der Absicherung von Gebäuden, im Personenschutz, der Volumenmessung von Objekten, grundsätzlich also bei allen Problemstellungen, bei denen es in irgendeiner Weise um die Erkennung von Objektkonturen geht.

Sensoren der beschriebenen Art sind grundsätzlich bekannt und unterscheiden sich im Wesentlichen im Hinblick auf die Reichweite, den Scanbereich und die jeweils eingesetzte Messwertverarbeitung. Ein besonders wichtiger Unterschied ist der Scanbereich, der bei bekannten Geräten entweder etwa 180° oder 360° beträgt.

Bei dem zweidimensionalen optischen Sensor der in EP 1 378 763 A1 beschriebenen Art wird ein rotierender Spiegel eingesetzt, um den Laserstrahl in eine Messebene zu reflektieren. Dabei strahlt der Laser in der Rotationsachse und der Empfänger empfängt in derselben Achse das von einem Objekt zurückgestrahlte Laserlicht. Durch den um 45° geneigten Spiegel wird das Licht im Idealfall genau im rechten Winkel in Richtung des Überwachungsbereichs, also der Messebene, beziehungsweise vom Überwachungsbereich in Richtung des Empfängers gespiegelt.

Da diese Anordnungen indes immer geringfügige mechanische Fehlpositionierungen, die auch als optischer Restfehler bezeichnet werden, beinhalten, ist der Einfallswinkel des Laserlichts auf den Spiegel nicht für alle Drehstellungen des Spiegels gleich. Der rotierende Laserstrahl taumelt deshalb um eine auf der Rotationsachse des Spiegels senkrecht stehende Ebene. Man spricht davon, dass der Strahl einen Taumelfehler aufweist. Im Hinblick auf Abhilfen zu diesem Problem stellt die Befestigung des Spiegels im Allgemeinen die größte Schwierigkeit dar. Wenn der Spiegel an der mechanischen Anordnung unten befestigt wird, ist es schwierig, das Laserlicht gleichwohl in der Rotationsachse auf den Spiegel einzustrahlen. Wenn der Spiegel andererseits oben befestigt und aufgehängt wird, entstehen Probleme bei der Befestigung und Anordnung des Antriebs insgesamt, da dies im Allgemeinen über eine Art Galgen durchgeführt werden muss. Dabei entsteht an der Stelle des Galgens, wo die Spannung und die mechanische Halterung für den Motor nach oben geführt wird, eine blinde Stelle und so gestaltete Sensoren sind nicht in der Lage, rundum zu messen, können also nicht über die vollen 360° die Umgebung abscannen.

Als eine Aufgabe der Erfindung kann angesehen werden, einen optischen Sensor nach dem Laufzeitprinzip bereitzustellen, bei dem mit technisch einfachen Mitteln ein Scanbereich von 360° ermöglicht wird.

DE 10 2004 014 041 A1 offenbart einen Sensor nach dem Laufzeitprinzip. Aus einem Überwachungsbereich zurückgestrahlte Strahlung kann dabei mit zwei verschiedenen Detektoren nachgewiesen werden.

In US 2005/0279914 A1 ist eine Vorrichtung beschrieben, mit welcher Energie berührungslos von einem ruhenden auf ein bewegtes, beispielsweise rotierendes Teil durch einen Transformator übertragen werden kann.

In DE 101 14 362 A1 ist ein weiteres Laserscanner-System beschrieben, bei dem auf einem Rotor ein Sender und ein Empfänger für aus einem Überwachungsbereich zurückgestrahltes Licht angeordnet ist. Die Umlenkung des Lichts erfolgt dabei auf dem Rotor mit einem Hohlspiegel.

In US-4,319,332 ist eine Vorrichtung zum Überwachen von Flächen und Räumen sowie darauf oder darin befindlichen Objekten nach dem Oberbegriff des Anspruchs 1 beschrieben. Mehrere Spiegel und Linsen sowie dazu gehörende mechanische Bestandteile sind dort in einem im Betrieb rotierenden Gehäuse untergebracht

Diese **Aufgabe** wird durch den optischen Sensor mit den Merkmalen des Anspruchs 1 gelöst.

Bevorzugte Ausgestaltungen des erfndungsgemäßen optischen Sensors werden in der folgenden Beschreibung, insbesondere im Zusammenhang mit den abhängigen Ansprüchen und der Figur beschrieben.

Der optische Sensor der oben beschriebenen Art ist erfindungsgemäß dadurch weitergebildet, dass die Dreheinrichtung einen Rotor und einen Stator aufweist und dass die Lichtquelle, der Detektor und eine elektronische Baugruppe, die Teil der Steuer- und Auswerteeinheit ist, zum gemeinsamen Rotieren auf dem Rotor angeordnet sind.

Als ein Kerngedanke der vorliegenden Erfindung kann erachtet werden, im Unterschied zum Stand der Technik die Lichtquelle und den Detektor starr zueinander anzuordnen und gemeinsam zu rotieren. Da die Lichtquelle und der Detektor gleichzeitig in einem festen System rotieren, kann kein Taumelfehler entstehen. Hierin liegt ein erster wesentlicher Vorteil der Erfindung.

Ein weiterer wesentlicher Vorteil ist, dass auch die bisher vorhandenen Schwierigkeiten des Antriebs ausgeschlossen sind. Unabhängig davon, wo der Rotor angetrieben wird, stört er in keinem Fall das Messsystem - und auch ein blinder Fleck kann ausgeschlossen werden, da über dem Messsystem keine elektrischen oder mechanischen Komponenten angebracht werden müssen.

Eine weitere wichtige Verbesserung besteht außerdem darin, dass durch die Positionierung von Lichtquelle und Detektor auf dem Rotor sehr kompakte Aufbauten möglich sind, und insbesondere lange optische Wege vermieden werden können. Im Vergleich zu bekannten System mit separat rotierenden Spiegeln und räumlich fest angeordneten Sendern und Empfängern können dadurch die optischen Wege dort deutlich verkürzt werden. Insgesamt wird auch deutlich weniger Bauraum benötigt und das Gesamtgerät kann deshalb kleiner gefertigt werden. Durch den kompakten Aufbau können außerdem die Luftverwirbelungen bei der Rotation reduziert werden und dadurch sind höhere Drehfrequenzen möglich.

Grundsätzlich können die aus dem Überwachungsbereich zurückgestrahlten Lichtpulse mit Hilfe von Linsen auf den Detektor geleitet und fokussiert werden. Erfindungsgemäß ist als optisches Mittel zum Leiten der von Objekten im Überwachungsbereich zurückgestrahlten Lichtpulse auf den Detektor ein ebenfalls auf dem Rotor montierter Spiegel vorhanden.

Dies ist einerseits mit sehr leichten Komponenten möglich und andererseits können mit einem Spiegel bei geringem Gewicht große numerische Aperturen und damit gute Lichtintensitäten erreicht werden.

Erfindungsgemäß wird als Spiegel ein Hohlspiegel eingesetzt, wobei mit einem Parabolspiegel besonders gute Fokussierungseigenschaften möglich sind. Ein Bauteil mit geringem Gewicht kann dabei erreicht werden, wenn der Hohlspiegel ein mit einer Beschichtung versehenes Kunststoffformteil ist.

Allgemein ist bei dem erfindungsgemäßen optischen Sensor bevorzugt, wenn die Komponenten so leicht wie möglich gebildet werden und außerdem möglichst nah zur Rotationsachse, also mit möglichst kleinem Trägheitsmoment, angeordnet werden. Höhere Rotationsgeschwindigkeiten und damit höhere Abtastraten der Umgebung sind dann leichter möglich.

Mit dem hier beschriebenen Gerät können Drehfrequenzen deutlich über 50 Hz, also größer als 3000 U/min. erzielt werden.

Zum rotativen Antrieb ist auf dem Rotor zweckmäßig ein Permanentmagnet angeordnet, der durch auf dem Stator angeordnete Spulen angetrieben werden kann. Der Permanentmagnet auf dem Rotor wirkt dabei wie ein Läufer eines Elektromotors.

Grundsätzlich ist es zwar möglich, elektrische Energie über Schleifkontakte vom Stator auf den Rotor zu übertragen. Besonders bevorzugt wird die zum Betrieb der Lichtquelle, des Detektors und der Baugruppe der Steuer- und Auswerteeinheit notwendige Energie vom Stator auf den Rotor jedoch berührungslos übertragen. Zweckmäßig kann dies bei einer weiteren bevorzugten Variante des erfindungsgemäßen Sensors dadurch erfolgen, dass bei der zwischen dem Stator und dem Rotor eine Transformatorstrecke zum Übertragen von Energie vom Stator auf den Rotor vorhanden ist. Prinzipiell kann diese Transformatorstrecke auch zum Übertragen von Informationen genutzt werden. Beispielsweise können Konfigurations- und/oder Steuerdaten vom ruhenden Teil, also vom Stator auf den bewegten Teil, also den Rotor, auf dem jedenfalls Teile der Steuer- und Auswerteeinheit angeordnet sind, übertragen werden. Hierzu reichen grundsätzlich niedrige Datenraten aus.

Auch eine Übertragung der über den Detektor ermittelten Messdaten nach außen könnte grundsätzlich auf elektrischem Weg erfolgen. Da hier aber große Datenmengen anfallen, ist besonders zweckmäßig, wenn zum Übertragen von Daten vom Rotor auf den Stator zwischen Rotor und Stator eine optische Übertragungsstrecke gebildet ist. Prinzipiell kann es sich hierbei um eine Übertragungsstrecke handeln, welche einen Datentransport nur in einer Richtung, nämlich vom Rotor auf den Stator ermöglicht. Auf dem Stator ist hierzu mindestens eine geeignete Lichtquelle, beispielsweise eine Leuchtdiode, vorhanden, deren modulierte Signale von einer oder mehreren auf dem Stator geeignet positionierten Photodiode oder Photodioden nachgewiesen werden. Grundsätzlich kann diese optische Übertragungsstrecke auch zum bidirektionalen Datenaustausch ausgebildet sein, wobei dann auf beiden Seiten jeweils mindestens eine Lichtquelle und mindestens ein Photodetektor vorhanden sind.

Besonders elegant und unaufwändig kann eine solche optische Übertragungsstrecke auf der Rotationsachse des Rotors verwirklicht sein.

Um den im Betrieb sehr rasch rotierenden Rotor mit den optischen und elektronischen Komponenten und den Stator vor Einflüssen von außen, insbesondere vor Verschmutzungen und mechanischer Beschädigung, zu schützen und außerdem eine Gefährdung von Personen durch die rotierenden Teile auszuschließen, ist der Rotor und der Stator zweckmäßig in einem relativ zum Stator ruhenden Gehäuse untergebracht.

Prinzipiell ist es möglich, in den Bereichen, in denen die Sendelichtpulse nach außen dringen und von Objekten im Überwachungsbereich zurückgestrahlte Lichtpulse zurück in Richtung des Detektors gelangen, offen zu lassen, so dass das Licht dort ungehindert austreten und eintreten kann. Da durch diese Öffnungen aber ebenso Verschmutzungen in den Sensorinnenraum eintreten können und auch eine Gefährdung des Bedienpersonals resultieren könnte, ist das Gehäuse bevorzugt weitgehend geschlossen ausgebildet und weist eine, insbesondere umlaufende, Trennscheibe auf. Als transparent soll in diesem Fall jedenfalls eine Durchlässigkeit für das verwendete Licht der Lichtquelle verstanden werden. Dies muss nicht unbedingt bedeuten, dass das Sensorinnere von außen einsehbar ist. Beispielsweise kann es sich bei dem transparenten Bereich, wenn als Lichtquelle ein roter Laser verwendet wird, um einen umlaufenden Bereich aus rotem Kunststoff handeln, der für die verwendete Wellenlänge des Lasers transparent ist.

Bei solchen optischen Sensoren muss dann sichergestellt werden, dass der Strahl der Lichtquelle, also beispielsweise der Laserstrahl, das Objekt, welches nachgewiesen werden soll, auch tatsächlich trifft. Wenn aus irgendeinem Grund der Laserstrahl übermäßig gedämpft wird oder möglicherweise ganz ausfällt, muss dies vom Sensor erkannt werden und einer Bedienperson oder einer übergeordneten Steuerung mitgeteilt werden. Andernfalls können Situationen entstehen, wo fehlerhaft keine Objekte erkannt werden, obwohl tatsächlich ein oder mehrere Objekte vorhanden sind. Die Funktionstüchtigkeit des Lasers selbst kann gut überwacht werden. Eine weitere Aufgabe entsteht, wenn das Laserlicht, wie im zuvor beschriebenen Fall noch ein optisches Fenster, also die vorstehend erwähnte Trennscheibe, des Gehäuses passieren muss und diese Trennscheibe oder das optische Fenster, das auch als transparenter Bereich bezeichnet werden kann, nicht die notwendigen Eigenschaften im Hinblick auf die Transmission erfüllt. Beispielsweise ist das gegeben, wenn der transparente Bereich verschmutzt oder beschädigt, gerissen oder gesprungen, ist. Um eine ordnungsgemäße Funktion des optischen Sensors zu gewährleisten, muss deshalb sichergestellt werden, dass eine hinreichend gute Transmission des transparenten Bereichs gegeben ist. Dies wird auch als Transmissionsüberwachung bezeichnet.

Bei bisher bekannten Sensoren werden als Trennscheiben gewölbte Scheiben verwendet, welche durch geeignete Ausrichtung einer Lichtquelle aufgrund der Wölbung zweimal von einem Testlichtstrahl, welcher beispielsweise durch Leuchtdioden bereitgestellt wird, geschnitten werden. Dies wird sodann an mehreren Stellen der Trennscheibe durchgeführt, um eine möglichst vollständige Überprüfung zu gewährleisten. Eine lückenlose Überprüfung, beispielsweise umlaufend über den gesamten transparenten Bereich oder die gesamte Trennscheibe, ist dabei aber nicht möglich. Die Transmissionskontrolle ist zwingend notwendig, um eine Messung sicher durchführen zu können, da der optische Sensor sonst nicht feststellen kann, ob tatsächlich kein nachzuweisendes Objekt vorhanden ist oder ob das gesamte Licht durch Verschmutzung der Trennscheibe absorbiert wird und das eigentliche Objekt tatsächlich übersehen wird.

Die Trennscheibe kann insbesondere umlaufend gebildet sein, das heißt sie erstreckt sich über den gesamten Dreh- oder Scanbereich von 360°.

Bei besonders bevorzugten Varianten des erfindungsgemäßen optischen Sensors ist deshalb zum Prüfen einer optischen Durchlässigkeit der Trennscheibe mindestens ein Testdetektor vorhanden, der auf dem Rotor angeordnet ist. Der Testdetektor ist auf Durchtrittsbereiche der Trennscheibe ausgerichtet, durch welche die Sendelichtpulse und/oder die zurückgestrahlten Lichtpulse hindurchtreten. Zum Bereitstellen des Testlichts ist weiterhin eine Testlichtquelle vorhanden, die ebenfalls auf dem Rotor angeordnet ist, und außerhalb des Gehäuses ist mindestens ein Reflektorelement angeordnet, auf welches das Testlicht ausgerichtet ist. Schließlich ist der Testdetektor so positioniert, dass von dem Reflektorelement zurückgestrahltes Testlicht nachgewiesen werden kann.

Als ein erster Kerngedanke dieser Weiterbildung kann angesehen werden, einen Testdetektor nicht mehr, wie im Stand der Technik, ortsfest zu positionieren, sondern vielmehr im Sensorinnenraum auf einem drehbaren Rotor anzuordnen.

Ein wesentlicher Vorteil dieser Variante kann darin gesehen werden, dass mit Hilfe des rotierenden Testdetektors eine kontinuierliche, und insbesondere auch umlaufende, Kontrolle und Überwachung des Durchtrittsbereichs in der Trennscheibe möglich ist.

Ein besonders großer Bereich der Frontscheibe kann im Hinblick auf die optische Durchlässigkeit bei einer weiteren Variante des erfindungsgemäßen optischen Sensors überprüft werden, bei der das Testlicht durch die Trennscheibe in einem ersten Bereich vom Sensorinnenraum nach außen austritt und das von dem Reflektorelement zurückgestrahlte Testlicht durch die Trennscheibe in einem von dem ersten Bereich verschiedenen zweiten Bereich von außen wieder in den Sensorinnenraum eintritt. In das tatsächlich vom Testdetektor gemessene Signal gehen dann sowohl die Eigenschaften der Trennscheibe in dem ersten Bereich als auch die Eigenschaften der Trennscheibe in dem zweiten Bereich ein, so dass dieses Messverfahren für beide Bereiche empfindlich ist. Der erste und der zweite Bereich können beispielsweise höhenmäßig zueinander versetzt sein, so dass die jeweiligen Strahlen einen unterschiedlichen Abstand zur Rotationsachse, also zum Rotationszentrum aufweisen. Dies kann auch als zentrischer Versatz bezeichnet werden.

Die Betriebssicherheit des erfindungsgemäßen optischen Sensors kann durch diese Maßnahmen deutlich gesteigert werden.

Als Reflektorelement kann beispielsweise ein kreisringförmiger Spiegel oder Segmente davon vorhanden sein.

Der oben beschriebene zentrische Versatz kann besonders elegant erreicht werden, wenn als Reflektorelement ein kreisringförmiges Profil oder Segmente davon mit dreieckigem Querschnitt aus einem transparenten Material eingesetzt wird. Das Testlicht wird an diesem Dreiecksprofil wie an einem aus der Optik grundsätzlich bekannten Strahlumlenker jeweils durch interne Reflexion reflektiert.

Um Anteile des von dem Reflektorelement zurückgestrahlten Testlichts von Fremdlichtanteilen zu trennen, wird die Testlichtquelle bevorzugt gepulst betrieben.

Grundsätzlich können, um eine möglichst vollständige Überprüfung der Durchlässigkeit der Trennscheibe zu erreichen, auch mehrere Testlichtquellen und/oder zugeordnete Testdetektoren, beispielsweise auf gegenüberliegenden Seiten des Rotors vorhanden sein.

Um eine möglichst vollständige Durchstrahlung der Trennscheibe zu erreichen, können zweckmäßig auch Mittel zum Aufweiten des Strahls der Testlichtquelle vorhanden sein. Da die Testlichtquelle und der Testdetektor rotieren, kommt es auf eine Verbreiterung oder Aufweitung in Umlaufrichtung dabei nicht an, sondern nur auf eine Aufweitung in einer Richtung senkrecht dazu. Deshalb kann hierzu der Einsatz von asymmetrischen Linsen oder Zylinderlinsen vorteilhaft sein.

Bei einer weiteren bevorzugten Variante des erfindungsgemäßen optischen Sensors ist das Reflektorelement unter einer Überkragung des Gehäuses montiert und ist dadurch besonders gut vor mechanischer Beschädigung und/oder Verschmutzung geschützt.

Erfindungsgemäß ist die Lichtquelle in einer an dem Kunststoffformteil angeformten Aufnahme untergebracht

Ein besonders kompakter Aufbau und eine besonders achsnahe Anordnung der verschiedenen Komponenten wird bei einer weiteren Ausgestaltung der Erfindung ermöglicht, bei der in dem Kunststoffformteil, in welchem der Spiegel gebildet ist, Aufnahmen angeformt sind, in denen der Detektor, die Testlichtquelle, der Testdetektor und/oder mindestens eine elektronisch Baugruppe als Teil der Steuer- und Auswerteeinheit untergebracht sind.

Weitere Vorteile und Merkmale des erfindungsgemäßen optischen Sensors werden nachstehend mit Bezug auf die beigefügte Figur beschrieben.

Hierin zeigt:

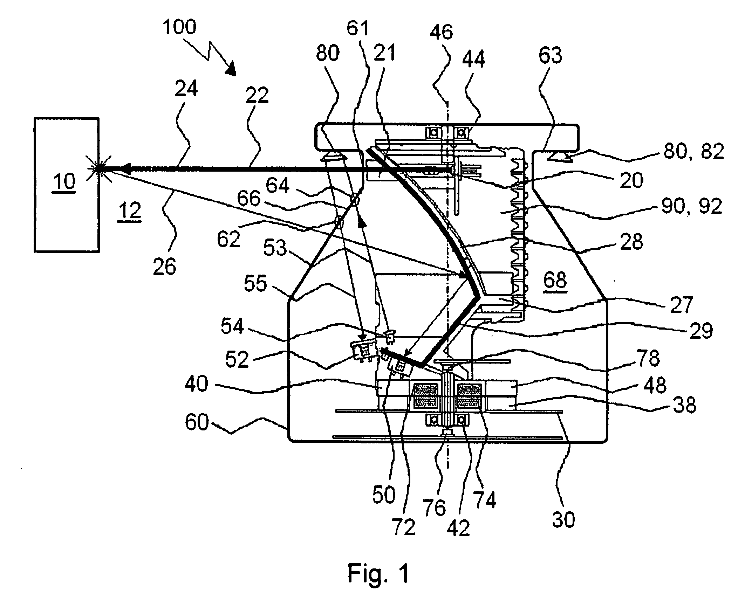

- Fig. 1:: ein Ausführungsbeispiel eines erfindungsgemäßen optischen Sensors.

Ein Ausführungsbeispiel eines erfindungsgemäßen optischen Sensors 100 wird mit Bezug auf Fig. 1 im Einzelnen beschrieben. Der dort schematisch gezeigte erfindungsgemäße optische Sensor 100 weist als wesentliche Komponenten eine Lichtquelle 20, einen Detektor 50 und eine elektronische Baugruppe 92 auf, die Teil einer Steuer- und Auswerteeinheit 90 ist. Weiterhin ist ein Hohlspiegel 28 vorhanden, der als Beschichtung 29 auf einem Kunststoffformteil 27 gebildet ist. In diesem Kunststoffformteil 27 sind über geeignete Aufnahmen, die in der Fig. 1 nicht im Einzelnen gezeigt sind, auch die Lichtquelle 20, der Detektor 50 und die elektronische Baugruppe 92 aufgenommen.

Das Kunststoffformteil 27 ist mit den daran angeordneten Komponenten auf einem Rotor 40 montiert, der gegenüber einem Stator 30 drehbar angeordnet ist. Der gesamte Aufbau ist in einem Gehäuse 60 mit flaschenförmigem Profil untergebracht, wobei der Rotor 40 mit Hilfe von Kugellagern 42, 44 bezüglich einer Rotationsachse 46 drehbar ist. Auf dem Rotor 40 ist außerdem ein Permanentmagnet 48 fest montiert, der über auf dem Stator 30 angeordnete Spulen 38 nach dem Prinzip eines Elektromotors angetrieben werden kann. Zum Übertragen von Energie vom Stator 30 auf den Rotor 40 ist durch Spulen 72, 74 eine Transformatorstrecke gebildet. Über diese Transformatorstrecke können grundsätzlich, wenn auch mit nur vergleichsweise geringer Datenrate, beispielsweise Konfigurations- und/oder Steuerdaten an die Lichtquelle 20, den Detektor 50 und/oder die elektronische Baugruppe 92 übertragen werden.

Das Gehäuse 60, das auch als Haube bezeichnet werden kann, dient einerseits dazu, einen Sensorinnenraum 68 von der Umgebung zu trennen und insbesondere vor Verschmutzung und mechanischer Beschädigung zu schützen. Ein weiterer Zweck des Gehäuses 60 ist, Bedienpersonen vor einer Gefährdung durch den rasch, beispielsweise mit Drehfrequenzen von über 3000 Umdrehungen pro Minute rotierenden Rotor 40 zu schützen.

Zum Übertragen von Daten von dem rotierenden Teil auf den Stator ist eine axial, also auf der Rotationsachse 46 angeordnete optische Übertragungsstrecke durch eine Leuchtdiode 78 und eine Photodiode 76 gebildet. Die Datenrate über die optische Übertragungsstrecke vom Rotor auf den Stator beträgt beispielsweise 100 MBaud.

Das Gehäuse 60 weist eine Trennscheibe 66 auf, die auch als transparenter Bereich bezeichnet werden kann. Bei der Trennscheibe 66 muss es sich nicht um ein separates Bauteil handeln, sondern sie kann, wie im gezeigten Beispiel, in einem Stück mit dem restlichen Gehäuse 60 gebildet sein. Wesentlich ist hierfür nur, dass das Gehäuse 60 wenigstens in einem Austrittsbereich 61, in dem Lichtpulse 22 der Lichtquelle 20 nach außen gelangen müssen, und außerdem in Bereichen 62, 64, in denen von einem Objekt 10 zurückgestrahlte Lichtpulse 26 zurück in den Sensorinnenraum 68 gelangen müssen, für die verwendeten Wellenlängen transparent ist. Im gezeigten Beispiel wird eine Laserdiode verwendet, welche bei 660 nm, also im dunkelroten Bereich, emittiert.

Um sicherzustellen, dass die Trennscheibe 66 hinreichend sauber ist, also eine ausreichende optische Durchlässigkeit gegeben ist, sind auf dem Rotor 40 außerdem eine Testlichtquelle 54, wobei es sich im gezeigten Beispiel um eine Leuchtdiode handelt, und ein Testdetektor 52 angeordnet. Die Testlichtquelle 54 und der Testdetektor 52 können insbesondere ebenfalls in Aufnahmen positioniert sein, die in dem Kunststoffformteil 27 gebildet sind. Prinzipiell können zum Fokussieren des Testlichts auf den Testdetektor 52 geeignete optische Mittel, beispielsweise Linsen, vorhanden sein.

Die Testlichtquelle 54 ist so positioniert, dass ausgesandtes Testlicht 53 in einem ersten Bereich 64 durch die Trennscheibe 66 hindurchtritt und sodann auf ein Reflektorelement 80 trifft, von welchem es umgelenkt und zurück in Richtung des Gehäuses 60 gestrahlt wird. Im gezeigten Beispiel handelt es sich bei dem Reflektorelement um ein kreisringförmiges Profil 82 mit dreieckigem Querschnitt, welches aus einem transparenten Kunststoff gefertigt ist. Wie in Fig. 1 schematisch andeutet, wird das Testlicht 53 durch das Reflektorelement 80 durch zweimalige interne Reflektion um 180° umgelenkt, wobei das zurückgestrahlte Testlicht 55, der Geometrie des Reflektorelements 80 entsprechend, geringfügig zentrisch nach außen versetzt ist. Das zurückgestrahlte Testlicht 55 tritt in einem zweiten Bereich 62 wieder in den Sensorinnenraum 68 ein und gelangt sodann auf den hierzu geeignet positionierten Testdetektor 52, der dieses Testlicht 55 nachweist.

Wenn nun die Oberflächen der Trennscheibe 66 verschmutzt sind oder die Trennscheibe 66 beschädigt, beispielsweise gerissen oder gesprungen, ist, wird dies durch den Testdetektor 52 als reduzierte Intensität des Testlichts festgestellt. Die vom Testdetektor 52 gemessene Intensität des Testlichts 53, 55 wird in der Steuer- und Auswerteeinheit 90 ausgewertet und in dem Fall, dass die gemessenen Intensitäten unter einem festzulegenden Schwellenwert liegen, werden die dann gewonnenen Messdaten bei der Auswertung nicht berücksichtigt.

Um zu verhindern, dass Sendelichtpulse 22 in anderer Weise als durch Rückstrahlung von einem Objekt 10 auf den Detektor 50 gelangen, ist die Lichtquelle 20 in einem Rohr 21 versenkt, welches ebenfalls an dem Kunststoffformteil 27 angeformt ist.

Ein wesentlicher Vorteil des erfindungsgemäßen optischen Sensors besteht darin, dass durch die gemeinsame Anordnung von Lichtquelle, Spiegel, Detektor und Auswerteelektronik auf dem Rotor besonders kompakte und insbesondere achsnahe Anordnungen möglich sind. Durch diese Einheit von Sender, Spiegel, Empfänger und Elektronik können Luftumwirbelungen, die einen begrenzenden Faktor für die maximal zu erreichenden Rotationsgeschwindigkeiten darstellen, deutlich reduziert werden.

Ein weiterer besonderer Vorteil der hier beschriebenen Variante eines erfindungsgemäßen optischen Sensors 100 ist, dass die Überwachung der Frontscheibe 66 umlaufend erfolgen kann, prinzipiell also über den vollständigen Winkelbereich von 360°, da sich die Testquelle 54 ebenso wie der Testdetektor 52 auf dem Rotor 40 befinden und im Betrieb des Sensors 100 mitrotieren. Der erste Bereich 64 und der zweite Bereich 62 fallen deshalb je nach Drehzustand des Rotors 40 auf jeweils andere Stellen der Frontscheibe 66. Ein weiterer wesentlicher Vorteil ist darin zu sehen, dass der erste Bereich 64 und der zweite Bereich 62 nicht zusammenfallen und somit ein besonders großer Bereich der Trennscheibe 66 bei der Auswertung im Hinblick auf eventuelle Verschmutzungen berücksichtigt wird.

Schließlich besteht ein Vorteil des hier beschriebenen Ausführungsbeispiels eines erfindungsgemäßen optischen Sensors auch darin, dass die Trennscheibe 66 nicht mehr gewölbt gebildet sein muss. Da die Lichtquelle 20 deshalb praktisch direkt vor einem Austrittsbereich 61 des Gehäuses 60 positioniert werden kann, können praktisch keine inneren Reflexionen in der Region des Austrittsbereichs 61 der Sendelichtpulse 22 entstehen. Eine Eigenblendung ist deshalb ausgeschlossen. Insbesondere kann die Trennscheibe 66 in einfacher Zylinderform gebildet werden.

Ein weiteres Detail des in Fig. 1 dargestellten optischen Sensors besteht darin, dass das kreisringförmige Profil 82, welches das Reflektorelement 80 bildet, unterhalb einer Überkragung 63 des Gehäuses 60 montiert ist und dadurch besonders gut vor mechanischer Einwirkung und somit vor Beschädigung von außen geschützt ist.

Prinzipiell wird bei der beschriebenen Transmissionskontrolle vom Boden her oder von der oberen Ebene des Rotors ein Testlichtstrahl schräg durch die im Wesentlichen zylindrische Außentrennscheibe, die auch als transparenter Bereich bezeichnet wird, gesendet. Dieser Strahl trifft oben oder unten auf das Reflexionsmittel, beispielsweise den kreisringförmigen Spiegel oder das kreisringförmige Profil, und wird parallel versetzt zurückgesendet. Dadurch wird die Trennscheibe an zwei Stellen im Hinblick auf eine mögliche Verschmutzung untersucht. Das bedeutet, dass die gemessenen Entfernungsdaten nur dann als gültig bewertet werden, wenn beide Bereiche, durch welche das Testlicht durchdringt, hinreichend sauber sind.

Der erfindungsgemäße optische Sensor arbeitet wie folgt: Die Lichtquelle 20 arbeitet prinzipiell ähnlich wie bekannte Laserpointer und sendet beispielsweise pro Sekunde 250.000 Sendelichtpulse 22 bei einer Wellenlänge von 660 nm, also im dunkelroten Spektralbereich, aus. Mit Hilfe einer nicht im Detail gezeigten Kollimatoroptik werden die Sendelichtpulse 22 dabei zu einem parallelen Strahlenbündel kollimiert. Im gezeigten Beispiel werden die Sendelichtpulse 22 in einer Strahlrichtung 24 ausgesandt, die bezüglich der Rotationsachse 46 des optischen Sensors 100 senkrecht orientiert ist. Wenn die Sendelichtpulse 22 auf ein Objekt 10 im Überwachungsbereich 12 treffen, werden sie von diesem Objekt 10 als Lichtpulse 26 zurückgestrahlt und gelangen durch die Frontscheibe 66 zurück in den Sensorinnenraum 68 und dort auf den Hohlspiegel 28. Der Detektor 50 ist relativ zum Hohlspiegel 28 so positioniert, dass die zurückgestrahlten Lichtpulse 26 möglichst vollständig in dem Detektor 50 nachgewiesen werden können.

Die Steuer- und Auswerteeinheit 90, die in Fig. 1 nicht in weiteren Details dargestellt ist und von der sich insbesondere auch Teile außerhalb des Gehäuses 60 befinden können, steuert die Lichtquelle 20 an, wertet die von dem Detektor 50 nachgewiesenen Lichtpulse 26 aus und ermittelt aus den gemessenen Laufzeiten einen Abstand eines nachgewiesenen Objekts 10. Durch Rotation der Strahlrichtung 24 der Sendelichtpulse 22 wird sodann die Strahlrichtung 24 in einer Ebene bewegt und der erfindungsgemäße optische Sensor 100 kann auf diese Weise ein Profil seiner Umgebung aufnehmen.

Dadurch sind höhere Drehgeschwindigkeiten möglich, so dass bei Navigationsanwendungen die jeweilige Umgebung mit größerer Messrate erfasst werden kann. Dies ist besonders wichtig für Anwendungen, bei denen sich die zu navigierenden oder zu steuernden Geräte oder Fahrzeuge vergleichsweise rasch bewegen. Wenn hierbei die Messdaten über die Umgebung mit nur geringer Rate bereitgestellt werden können, führt dies dazu, dass sich die Position des zu navigierenden Fahrzeugs zwischen zwei Messungen bereits deutlich geändert hat. Die hierbei entstehenden Effekte werden auch als Raumverzerrungen bezeichnet. Diese können zwar prinzipiell zurückgerechnet werden, hierfür sind jedoch zusätzliche Sensoren, beispielsweise Geschwindigkeitssensoren oder Winkelsensoren in der Art eines Kompasses, notwendig.

Mit Hilfe des erfindungsgemäßen optischen Sensors kann aufgrund der gesteigerten Drehgeschwindigkeit auf diese zusätzlichen Sensoren für eine Vielzahl von Anwendungen verzichtet werden und dadurch sind erhebliche Kostenreduzierungen möglich.

Eine weitere Anwendungsmöglichkeit ergibt sich für die erfindungsgemäßen Sensoren im Bereich der Verkehrsüberwachung zur Mautberechnung. Ein erfindungsgemäßer optischer Sensor könnte beispielsweise auf einer Brücke montiert werden und die Profile oder Konturen der unter der Brücke hindurchfahrenden Fahrzeuge ermitteln. Da diese Profile für die unterschiedlichen Fahrzeugtypen zumeist sehr kennzeichnungskräftig sind, kann so ermittelt werden, zu welchem Zeitpunkt ein bestimmter Fahrzeugtyp die fragliche Brücke passiert hat.

Mit der vorliegenden Erfindung wird ein neuartiger zweidimensionaler optischer Messsensor nach dem Laufzeitprinzip beschrieben, bei dem in besonders eleganter Weise eine Überwachung des gesamten Drehbereichs von 360° möglich ist. Dies wird dadurch ermöglicht, dass in dem optischen Sensor kein unabhängig rotierender Spiegel vorhanden ist, dessen Halterung eine blinde Stelle erzeugen würde. Bei dem hier beschriebenen optischen Sensor dreht sich die komplette Messeinheit, also ein Einheit, die die Lichtquelle, den Detektor, den Spiegel und Teile der Messelektronik beinhaltet. Die für die Lichtquelle, den Detektor und die Elektronik notwendige Energie wird kontaktlos vom Stator auf den Rotor, der auch als Messkopf bezeichnet wird, übertragen. Ebenso erfolgt die Datenübertragung vom Rotor auf den stehenden Teil des Sensors, der auch als Stator bezeichnet wird, berührungslos, insbesondere über eine optische Übertragungsstrecke.

## Patentansprüche

1. Optischer Sensor nach dem Laufzeitprinzip
mit einer Lichtquelle (20) zum Aussenden von Sendelichtpulsen (22) in einen Überwachungsbereich (12),
mit einer Dreheinrichtung zum Drehen einer Strahlrichtung (24) der Sendelichtpulse (22) um eine quer zu der Strahlrichtung (24) orientierte Rotationsachse (46),
mit einem Detektor (50) zum Nachweisen von Lichtpulsen (26), die von Objekten (10) im Überwachungsbereich (12) zurückgestrahlt werden, und
mit einer Steuer- und Auswerteeinheit (90) zum Ansteuern der Lichtquelle (20), zum Auswerten der von dem Detektor (50) nachgewiesenen Lichtpulse (26) und zum Bestimmen eines Objektabstands aufgrund einer gemessenen Laufzeit der Lichtpulse (26),
wobei die Dreheinrichtung einen Rotor (40) und einen Stator (30) aufweist und wobei die Lichtquelle (20), der Detektor (50) und eine elektronische Baugruppe (92), die Teil der Steuer- und Auswerteeinheit (90) ist, zum gemeinsamen Rotieren auf dem Rotor (40) angeordnet sind,
wobei zum Leiten der von Objekten (10) im Überwachungsbereich (12) zurückgestrahlten Lichtpulse (26) auf den Detektor (50) ein auf dem Rotor (40) angeordneter Hohlspiegel (28) vorhanden ist,
**dadurch gekennzeichnet,**
**dass** der Hohlspiegel (28) als Beschichtung (29) auf einem Kunststoffformteil (27) gebildet ist und
**dass** die Lichtquelle (20) in einer an dem Kunststoffformteil (27) angeformten Aufnahme (21) untergebracht ist.

2. Sensor nach Anspruch 1,
**dadurch gekennzeichnet,**
**dass** auf dem Rotor (40) ein Permanentmagnet (48) angeordnet ist, der durch auf dem Stator (30) angeordnete Spulen (38) antreibbar ist.

3. Sensor nach Anspruch 1 oder 2,
**dadurch gekennzeichnet,**
**dass** zwischen dem Stator (30) und dem Rotor (40) eine Transformatorstrecke (72, 74) zum Übertragen von Energie vom Stator (30) auf den Rotor (40) vorhanden ist.

4. Sensor nach einem der Ansprüche 1 bis 3,
**dadurch gekennzeichnet,**
**dass** zum Übertragen von Daten vom Rotor (40) auf den Stator (30) zwischen Rotor (40) und Stator (30) eine optische Übertragungsstrecke (76, 78) gebildet ist.

5. Sensor nach Anspruch 4,
**dadurch gekennzeichnet,**
**dass** die optische Übertragungsstrecke (76, 78) auf der Rotationsachse (46) des Rotors (40) gebildet ist.

6. Sensor nach einem der Ansprüche 1 bis 5,
**dadurch gekennzeichnet,**
**dass** der Hohlspiegel (28) ein Parabolspiegel ist.

7. Sensor nach einem der Ansprüche 1 bis 5,
**dadurch gekennzeichnet,**
**dass** der Rotor (40) und der Stator (30) in einem relativ zum Stator (30) ruhenden Gehäuse (60) untergebracht sind und
**dass** das Gehäuse (60) eine Trennscheibe (66) aufweist, die für die Sendelichtpulse (22) und die zurückgestrahlten Lichtpulse (26) durchlässig ist.

8. Sensor nach Anspruch 6,
**dadurch gekennzeichnet,**
**dass** zum Prüfen einer optischen Durchlässigkeit der Trennscheibe (66) mindestens ein Testdetektor (52) vorhanden ist, der auf dem Rotor (40) angeordnet ist,
**dass** der Testdetektor (52) auf Durchtrittsbereiche (61, 62, 64) der Trennscheibe (66) ausgerichtet ist, durch welche die Sendelichtpulse (22) und/oder die zurückgestrahlten Lichtpulse (26) hindurchtreten,
**dass** zum Bereitstellen des Testlichts (53) eine Testlichtquelle (54) vorhanden ist, die ebenfalls auf dem Rotor (40) angeordnet ist,
**dass** außerhalb des Gehäuses (60) mindestens ein Reflektorelement (80) angeordnet ist, auf welches das Testlicht (53) ausgerichtet ist, und
**dass** der Testdetektor (52) zum Nachweisen von von dem Reflektorelement (80) zurückgestrahltem Testlicht (55) positioniert ist.

9. Sensor nach Anspruch 8,
**dadurch gekennzeichnet,**
**dass** das Testlicht (53) durch die Trennscheibe (66) in einem ersten Bereich (64) vom Sensorinnenraum (68) nach außen austritt und
**dass** das von dem Reflektorelement (80) zurückgestrahlte Testlicht (55) durch die Trennscheibe (66) in einem von dem ersten Bereich (64) verschiedenen zweiten Bereich (62) von außen in den Sensorinnenraum (68) eintritt.

10. Sensor nach Anspruch 8 oder 9,
**dadurch gekennzeichnet,**
**dass** die Testlichtquelle (54) zum gepulsten Betrieb eingerichtet ist.

11. Sensor nach einem der Ansprüche 8 bis 10,
**dadurch gekennzeichnet,**
**dass** das Reflektorelement (80) ein kreisringförmiger Spiegel oder ein kreisringförmiges Profil (82) mit dreieckigem Querschnitt, insbesondere aus transparentem Kunststoff, ist.

12. Sensor nach einem der Ansprüche 8 bis 11,
**dadurch gekennzeichnet,**
**dass** das Reflektorelement (80) unter einer Überkragung (63) des Gehäuses (60) montiert ist.

13. Sensor nach einem der Ansprüche 8 bis 12,
**dadurch gekennzeichnet,**
**dass** in dem Kunststoffformteil (27) Aufnahmen angeformt sind, in denen die Testlichtquelle (54), der Testdetektor (52) und/oder die elektronische Baugruppe (92) untergebracht sind.

14. Sensor nach einem der Ansprüche 1 bis 13,
**dadurch gekennzeichnet,**
**dass** in dem Kunststoffformteil (27) eine Aufnahme angeformt ist, in der der Detektor (50) untergebracht ist.

## Claims

1. An optical sensor based on the transit time principle
comprising a light source (20) for the emission of emergent light pulses (22) into an observed region (12),
comprising a rotating device for rotating a beam direction (24) of said emergent light pulses (22) about a rotation axis (46) orientated transversely to said beam direction (24)
comprising a detector (50) for the detection of light pulses (26) reflected by objects (10) in the observed region (12), and
comprising a control and evaluation unit (90) for controlling the light source (20), for evaluating the light pulses (26) detected by said detector (50), and for determing the distance away of an object on the basis of a measured transit time of said light pulses (26),
wherein the rotating device has a rotor (40) and a stator (30) and
wherein the light source (20), said detector (50), and an electric assembly (92) forming part of said control and evaluating unit (90) are disposed for joint rotation on said rotor (40),
wherein a concave mirror (28) disposed on said rotor (40) is provided for the purpose of guiding light pulses (26) reflected by objects (10) in said observed region (12) to said detector (50),
**characterized in that**
said concave mirror (28) is formed as a coating (29) on a moulded plastic part (27) and
the light source (20) is placed at a receptacle (21) moulded at the moulded plastic part (27).

2. The sensor as defined in claim 1,
**characterized in that**
said rotor (40) is provided with a permanent magnet (48) capable of being driven by coils (38) located on said stator (30).

3. The sensor as defined in claim 1 or 2,
**characterized in that**
between said stator (30) and said rotor (40) there is provided a transformer link (72, 74) for the transfer of energy from said stator (30) to said rotor (40).

4. The sensor as defined in anyone of claims 1 to 3,
**characterized in that**
for the transfer of data from said rotor (40) to said stator (30) there is provided an optical transmission route (76, 78) between said rotor (40) and said stator (30).

5. The sensor as defined in claim 4,
**characterized in that**
said optical transmission route (76, 78) is formed on the rotation axis (46) of said rotor (40).

6. The sensor as defined in anyone of claims 1 to 5,
**characterized in that**
said concave mirror (28) is a parabolic mirror.

7. The sensor as defined in anyone of claims 1 to 5,
**characterized in that**
said rotor (40) and said stator (30) are accommodated in a housing (60) which is stationary in relation to said stator (30) and
that said housing (60) includes a partitioning screen (66), which screen is transparent to the emergent light pulses (22) and to the reflected light pulses (26).

8. The sensor as defined in claim 6,
**characterized in that**
for the purpose of testing an optical translucence of said partitioning screen (66), at least one test detector (52) is provided which is disposed on said rotor (40),
that the test detector (52) is oriented towards throughput regions (61, 62, 64) of the partitioning screen (66) through which the emergent light pulses (22) and/or the reflected light pulses (26) pass,
that for the purpose of providing said test light (53), a test light source (54) is provided, which is likewise disposed on said rotor (40),
that outside of said housing (60) there is provided at least one reflector element (80) to which the test light (53) is directed, and
that said test detector (52) is positioned such that it can detect the test light (55) reflected by said reflector element (80).

9. The sensor as defined in claim 8,
**characterized in that**
said test light (53) passes outwardly from the sensor interior (68) through said partitioning screen (66) in a first region (64) thereof and
that the test light (55) reflected by said reflector element (80) passes from the outside into the sensor interior (68) through said partitioning screen (66) in a second region (62) thereof which differs from said first region (64).

10. The sensor as defined in claim 8 or 9,
**characterized in that**
said test light source (54) is adapted for a pulsed operation.

11. The sensor as defined in anyone of claims 8 to 10,
**characterized in that**
said reflector element (80) is a circular annular mirror, or a circular annular profile (82) having a triangular cross-section, particularly of transparent plastic material.

12. The sensor as defined in anyone of claims 8 to 11,
**characterized in that**
said reflector element (80) is mounted below an overhang (63) of said housing (60).

13. The sensor as defined in anyone of claims 8 to 12,
**characterized in that**
accommodating means are formed in said moulded plastic part (27), for the accommodation of said test light source (54), said test detector (52) and/or said electronic assembly (92).

14. The sensor as defined in anyone of claims 1 to 13,
**characterized in that**
accommodating means are formed in said moulded plastic part (27) for the accommodation of said detector (50).

## Revendications

1. Capteur optique selon le principe du temps de vol
avec une source de lumière (20) pour envoyer des impulsions lumineuses émises (22) dans une zone de surveillance (12),
avec un dispositif rotatif pour faire tourner une direction de rayon (24) des impulsions lumineuses émises (22) autour d'un axe de rotation (46) orienté transversalement à la direction de rayon (24),
avec un détecteur (50) pour détecter des impulsions lumineuses (26) qui sont réfléchies par des objets (10) situés dans la zone de surveillance (12), et avec une unité (90) de commande et d'analyse pour commander la source lumineuse (20), pour analyser les impulsions lumineuses (26) détectées par le détecteur (50) et pour déterminer la distance d'un objet à partir d'un temps de vol mesuré des impulsions lumineuses (26),
dans lequel le dispositif rotatif présente un rotor (40) et un stator (30), et dans lequel la source lumineuse (20), le détecteur (50) et un sous-ensemble électronique (92) qui fait partie de l'unité (90) de commande et d'analyse sont placés sur le rotor (40) en vue d'une rotation commune,
dans lequel, pour envoyer sur le détecteur (50) les impulsions lumineuses (26) réfléchies par des objets (10) situés dans la zone de surveillance (12), il est prévu un miroir concave (28) placé sur le rotor (40),
***caractérisé***
***en ce que*** le miroir concave (28) est formé d'un revêtement (29) sur une pièce moulée (27) en matière plastique, et
***en ce que*** la source lumineuse (20) est placée dans un logement (21) formé sur la pièce moulée (27) en matière plastique.

2. Capteur selon la revendication 1,
***caractérisé***
***en ce que*** sur le rotor (40) est monté un aimant permanent (48) qui peut être entraîné par des bobines (38) placées sur le stator (30).

3. Capteur selon la revendication 1 ou 2,
***caractérisé***
***en ce qu*'**entre le stator (30) et le rotor (40) se trouve une ligne de transformateurs (72, 74) pour transmettre de l'énergie du stator (30) au rotor (40).

4. Capteur selon l'une quelconque des revendications 1 à 3,
***caractérisé***
***en ce que****,* pour transmettre des données du rotor (40) au stator (30), une ligne de transmission optique (76, 78) est formée entre rotor (40) et stator (30).

5. Capteur selon la revendication 4,
***caractérisé***
***en ce que*** la ligne de transmission optique (76, 78) est formée sur l'axe de rotation (46) du rotor (40).

6. Capteur selon l'une quelconque des revendications 1 à 5,
***caractérisé***
***en ce que*** le miroir concave (28) est un miroir parabolique.

7. Capteur selon l'une quelconque des revendications 1 à 5,
***caractérisé***
***en ce que*** le rotor (40) et le stator (30) sont logés dans un boîtier (60) immobile par rapport au stator (30) et
***en ce que*** le boîtier (60) comprend un disque séparateur (66) qui est transparent aux impulsions lumineuses émises (22) et aux émissions lumineuses réfléchies (26).

8. Capteur selon la revendication 6,
***caractérisé***
***en ce que****,* pour vérifier une transparence optique de la plaque séparatrice (66), au moins un détecteur de test (52) est présent, qui est placé sur le rotor (40), *en ce que* le détecteur de test (52) est dirigé vers des zones de traversée (61, 62, 64) de la plaque séparatrice (66) à travers lesquelles passent les impulsions lumineuses émises (22) et/ou les impulsions lumineuses réfléchies (26),
***en ce que**,* pour délivrer la lumière de test (53), il est prévu une source lumineuse de test (54) qui est également placée sur le rotor (40),
***en ce qu'**à* l'extérieur du boîtier (60) est placé au moins un élément réflecteur (80) sur lequel est envoyée la lumière de test (53), et
***en ce que*** le détecteur de test (52) est positionné pour détecter la lumière de test (55) réfléchie par l'élément réflecteur (80).

9. Capteur selon la revendication 8,
***caractérisé***
***en ce que*** la lumière de test (53) sort de l'intérieur (68) du capteur vers l'extérieur à travers la plaque séparatrice (66) dans une première zone (64) et
***en ce que*** la lumière de test (55) réfléchie par l'élément réflecteur (80) rentre de l'extérieur dans l'intérieur (68) du capteur à travers la plaque séparatrice (66) dans une deuxième zone (62) différente de la première zone (64).

10. Capteur selon la revendication 8 ou 9,
***caractérisé***
***en ce que*** la source lumineuse de test (54) est agencée pour un fonctionnement pulsé.

11. Capteur selon l'une quelconque des revendications 8 à 10,
***caractérisé***
***en ce que*** l'élément réflecteur (80) comprend un miroir de forme circulaire-annulaire ou un profilé circulaire-annulaire (82) de section triangulaire, en particulier en matière plastique transparente.

12. Capteur selon l'une quelconque des revendications 8 à 11,
***caractérisé***
***en ce que*** l'élément réflecteur (80) est monté sous une collerette (63) du boîtier (60).

13. Capteur selon l'une quelconque des revendications 8 à 12,
***caractérisé***
***en ce que****,* dans la pièce moulée en matière plastique (27), sont formés des logements dans lesquels sont reçus la source lumineuse de test (54), le détecteur de test (52) et/ou le sous-ensemble électronique (92).

14. Capteur selon l'une des revendications 1 à 13,
***caractérisé***
***en ce que*** dans la pièce moulée (27) en matière plastique est formé un logement dans lequel est logé le détecteur (50).
